# EUROPEAN PATENT APPLICATION

(11) **EP 4 800 553 A1**
(43) Date of publication of application: **02.09.2026**
(21) Application number: 24940907.9
(22) Date of filing: 28.11.2024
(51) Int. Cl.: G06F 9/50, H04L 67/60, G06N 3/0442

(54) **METHOD FOR TRAINING LEARNING DEVICE AND COMPUTING DEVICE FOR PERFORMING SAME**

(30) Priority: 27.09.2024 KR 20240132095; 26.11.2024 KR 20240170927
(71) Applicant: UNIVERSITY-INDUSTRY COOPERATION GROUP OF KYUNG HEE UNIVERSITY, Yongin-si, Gyeonggi-do 17104 (KR)
(72) Inventor: HUH, Eui-Nam, Yongin-si, Gyeonggi-do 17100 (KR); JO, Hyeon Ki, Suwon-si, Gyeonggi-do 16676 (KR); MAHBUB, Md Nosin Ibna, Suwon-si, Gyeonggi-do 16705 (KR)
(74) Representative: Isarpatent
(86) International application number: PCT/KR2024/019089
(87) International publication number: WO 2026/071331

(57) **Abstract**

A method according to a disclosed embodiment is a method performed on a computing device including one or more processors and a memory storing one or more programs executed by the one or more processors, the method including the steps of outputting characteristic data representing attributes of a machine learning model by inputting input data of a predetermined domain into the machine learning model and, transmitting the characteristic data to a domain discrimination device, receiving a domain source prediction value corresponding to the characteristic data from the domain discrimination device, and training the machine learning model by a first loss function that increases a difference between the domain source prediction value and a domain correct value of the characteristic data.

## Description

### TECHNICAL FIELD

The present invention relates to a technique of a method for training learning devices.

### BACKGROUND ART

In the field of cloud computing, as the domain environments in which computing devices operate diversify, it is becoming increasingly important for computing devices in different domains to be trained to produce consistent results.

In an exemplary embodiment, a cluster (a set of computing devices that processes data for a domain) for a particular domain (e.g., Google) can only analyze data input into that domain. When a domain cluster analyzes time-series data for a workload, the domain cluster may predict the workload for a time that has not yet arrived. In this case, Google's domain cluster and Alibaba's domain cluster may be trained with different characteristics. Accordingly, even when the same new input value is input, the clusters in the respective domains may produce different prediction results. To prevent this, a technique that can universally train both domain clusters is required.

Recently, knowledge distillation techniques using teacher-student models have been utilized to train neural networks of different learning devices. However, these techniques have the limitation in that they only enable a one-way flow of knowledge, transferring the knowledge of a teacher model to a student model, and fail to efficiently transfer the knowledge of the teacher model.

To overcome these limitations, a technique is required that universally trains two or more learning models operating in different domain environments together to produce the same results.

### DISCLOSURE OF THE INVENTION

### TECHNICAL PROBLEM

An object of the present invention is to provide a method for training learning devices capable of universally training two or more learning models operating in different domain environments together to produce the same results, and a computing device for performing the same.

The objects of the present invention are not limited to that mentioned above, and other objects and advantages of the present specification that are not mentioned may be understood by the following description and will be more clearly understood by the embodiments of the present specification. Furthermore, it will be readily apparent that the objects and advantages of the present specification may be implemented by the means and combinations thereof set forth in the claims.

### TECHNICAL SOLUTION

A method according to a disclosed embodiment is a method performed on a computing device including one or more processors and a memory storing one or more programs executed by the one or more processors, the method including the steps of outputting characteristic data representing attributes of a machine learning model by inputting input data of a predetermined domain into the machine learning model, transmitting the characteristic data to a domain discrimination device, receiving a domain source prediction value corresponding to the characteristic data from the domain discrimination device, and training the machine learning model by a first loss function that increases a difference between the domain source prediction value and a domain correct value of the characteristic data.

The step of outputting the characteristic data may include a step of generating a plurality of embedding vectors from input data of the computing device and a step of producing characteristic data by applying an attention mechanism to the plurality of embedding vectors.

The step of applying the attention mechanism may include a step of calculating a weight of each of the plurality of embedding vectors and a step of producing characteristic data based on the weight of each of the embedding vectors.

The weight α(*qₜ*, *k*_{*t*'}) may be calculated by the following Equation 1. $α \left({q}_{t}, {k}_{t ′}\right) = \frac{K \left({q}_{t}, {k}_{t ′}\right)}{{\sum }_{t ′ ∈ N \left(t\right)} K \left({q}_{t}, {k}_{t ′}\right)}$
*α*(*qₜ*, *k_{t'}*): weight of embedding vector
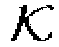 (·,·): Kernel function
(*qₜ, kₜ*): multidimensional vector of input data (embedding vector)

The embedding vector (*qₜ, kₜ*) may be calculated by the following Equation 2. $\left({q}_{t}, {k}_{t}\right) = MLP \left(Q, K, {θ}_{s}\right)$
(*qₜ*, *kₜ*): multidimensional vector of input data (embedding vector)
*Q*: query data of vector
*K*: key data of the vector
*θₛ*: training parameters of multi-layer perceptron (MLP)

The method may further include a step of training the machine learning model according to a preset second loss function based on the input data and the plurality of embedding vectors.

A method according to a disclosed embodiment is a method performed on a computing device including one or more processors and a memory storing one or more programs executed by the one or more processors, the method including the steps of acquiring characteristic data representing characteristics of a learning model executed by each of two or more learning devices from each of the two or more learning devices, determining a source of the characteristic data and calculating a domain source prediction value, transmitting the domain source prediction value to each of the two or more learning devices and controlling each of the two or more learning devices to train the learning model based on a first loss function that uses the domain source prediction value and a correct value of the domain source as factors.

A computing device according to a disclosed embodiment is a computing device including one or more processors and a memory that stores one or more programs executed by the one or more processors, in which the one or more programs include the instructions for outputting characteristic data representing attributes of a machine learning model by inputting input data of a predetermined domain into the machine learning model, transmitting the characteristic data to a domain discrimination device, receiving a domain source prediction value corresponding to the characteristic data from the domain discrimination device, and training the machine learning model by a first loss function that increases a difference between the domain source prediction value and a domain correct value of the characteristic data.

### ADVANTAGEOUS EFFECTS

According to a disclosed embodiment, computing devices in different domains can be trained to produce consistent results. In other words, two or more learning models running in different domain environments can be universally trained together to produce the same results.

In an exemplary embodiment, each cluster of different domains can be trained to produce the same prediction result when receiving new data.

### BRIEF DESCRIPTION OF THE DRAWINGS

The present disclosure can be readily understood by the combination of the following detailed description and the accompanying drawings, in which the reference numerals refer to structural elements.
FIG. 1 is a schematic diagram illustrating an environment for training a plurality of learning devices in different domains, according to an embodiment.
FIG. 2 is a schematic diagram illustrating a method for training a plurality of learning devices in different domains, according to an embodiment.
FIG. 3 is a flowchart illustrating a method for training a plurality of learning devices in different domains, according to an embodiment.
FIG. 4 is a diagram illustrating an algorithm for implementing training by a first loss function, according to an embodiment.
FIG. 5 is a flowchart illustrating a method for generating characteristic data representing attributes of a learning device for each domain learning device, according to an embodiment.
FIG. 6 is a block diagram illustrating a configuration of a computing device for training a plurality of learning devices in different domains, according to an embodiment.

### MODE FOR CARRYING OUT THE INVENTION

There is provided a method performed on a computing device including one or more processors and a memory storing one or more programs executed by the one or more processors, the method including the steps of outputting characteristic data representing attributes of a machine learning model by inputting input data of a predetermined domain into the machine learning model, transmitting the characteristic data to a domain discrimination device, receiving a domain source prediction value corresponding to the characteristic data from the domain discrimination device, and training the machine learning model by a first loss function that increases a difference between the domain source prediction value and a domain correct value of the characteristic data.

Hereinafter, specific embodiments of the present invention will be described with reference to the drawings. The following detailed description is provided to facilitate a comprehensive understanding of the methods, apparatuses, and/or systems described herein. However, this is only an example and the present invention is not limited thereto.

In describing embodiments of the present invention, if it is determined that a specific description of a related known function of the preset invention may unnecessarily obscure the gist of the present invention, the detailed description thereof will be omitted. The terms described below are terms defined in consideration of the functions in the present invention, and vary depending on the intention or custom of the user or operator. Therefore, the definition should be made based on the contents throughout this specification. The terminology used in the detailed description is for the purpose of describing embodiments of the present invention only and should not be construed as limiting. Unless expressly used otherwise, singular forms include plural forms. In this description, the terms "including" or "comprising" are intended to refer to certain features, numbers, steps, operations, elements, portions or combinations thereof, and should not be construed to exclude the presence or possibility of one or more other features, numbers, steps, operations, elements, portions or combinations thereof other than those described.

In addition, terms including ordinal numbers, such as 'first' or 'second', may be used to describe various components, but the components should not be limited by the terms. The terms may be used for the purpose of distinguishing one component from another component. For example, without departing from the scope of the present invention, a first component may be referred to as a second component, and similarly, a second component may also be referred to as a first component.

When a configuration is described as "connected" to another configuration, this includes not only cases where they are "connected directly" but also cases where they are "connected with another configuration in between."

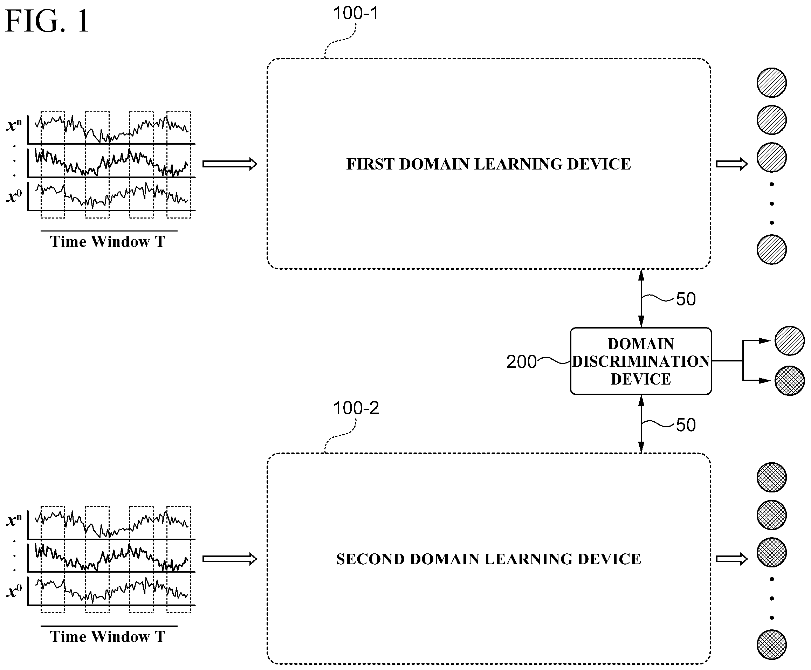

FIG. 1 is a schematic diagram illustrating an environment for training a plurality of learning devices in different domains, according to an embodiment.

Referring to FIG. 1, the environment for training a plurality of learning devices in different domains may include two or more domain learning devices 100-1 and 100-2 and a domain discrimination device 200. Each of the domain learning devices 100-1 and 100-2 may communicate with the domain discrimination device 200. In this case, each of the domain learning devices 100-1 and 100-2 may be connected to and communicate with the domain discrimination device 200 through a communication network 50.

In an exemplary embodiment, the communication network 50 may include the Internet, one or more local area networks (LANs), wide area networks (WANs), cellular networks, mobile networks, other types of networks, or a combination of these networks.

Each of the two or more domain training devices 100-1 and 100-2 may acquire output data corresponding to a training purpose when being trained on input data and acquiring new data. Each of the domain learning devices 100-1 and 100-2 may be trained for the same objective, but due to difference in their respective training data and domain environments, the learning content and learning results of each of the domain learning devices 100-1 and 100-2 may exhibit different characteristics.

Accordingly, even when the same new data is input, each of the domain learning devices 100-1 and 100-2 may output different result data. In order to prevent different results from being derived, each of the domain learning devices 100-1 and 100-2 may be trained to have the same properties through an operation of the domain discrimination device 200.

In an exemplary embodiment, each of the domain learning devices 100-1 and 100-2 may include a processor that executes a machine learning model. Each of the domain learning devices 100-1 and 100-2 may include various electronic devices capable of communicating with the domain discrimination device 200. For example, each of the domain learning devices 100-1 and 100-2 may include a smart phone, a tablet PC, a notebook PC, a desktop personal computer, a personal digital assistant (PDA), a wearable device such as a smart watch, an e-book reader, smart glasses, a portable game console, a navigation device, a digital camera, etc.

The domain discrimination device 200 may receive characteristic data corresponding to each of the domain learning devices 100-1 and 100-2. Each characteristic data may represent the properties of the corresponding domain learning devices 100-1 and 100-2. The domain discrimination device 200 may attempt to distinguish the source of the received characteristic data. Each of two or more domain learning devices 100-1 and 100-2 may be trained so that the domain discrimination device 200 cannot distinguish the source of the characteristic data.

In an exemplary embodiment, the domain discrimination device 200 includes one or more processors required to generate data for training a machine learning model and a computer-readable recording medium connected to the processors, and may further include a database for storing data. The computer-readable recording medium may be internal or external to the processor and may be connected to the processor by various well-known means. The processor within the domain discrimination device 200 may cause the domain discrimination device 200 to operate according to the exemplary embodiments described herein. For example, the processor may execute instructions stored in a computer-readable recording medium, and the instructions stored in the computer-readable recording medium, when executed by the processor, may be configured to cause the domain discrimination device 200 to perform operations according to the exemplary embodiment described herein.

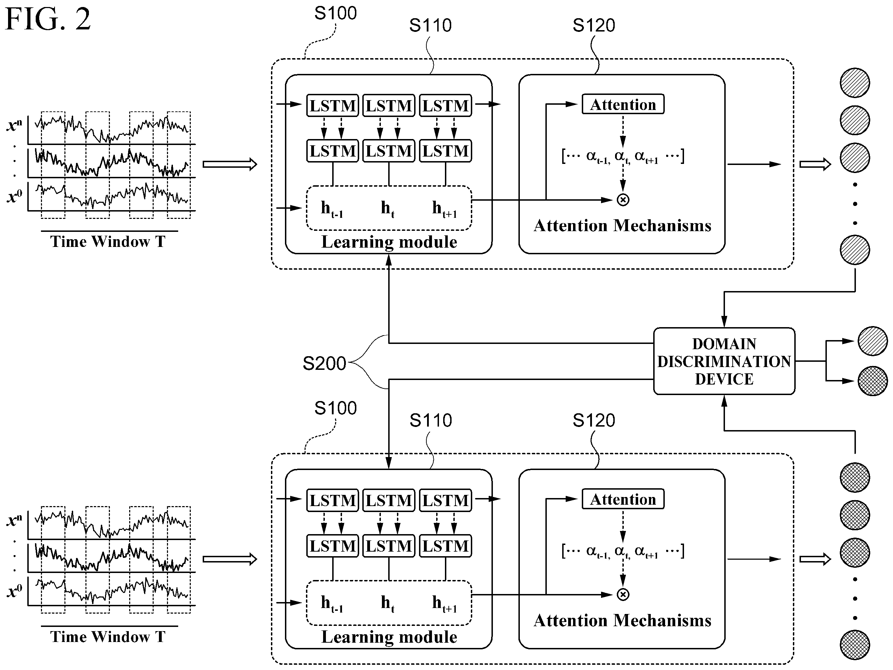

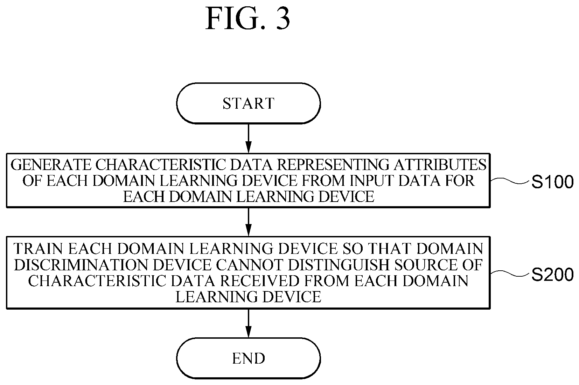

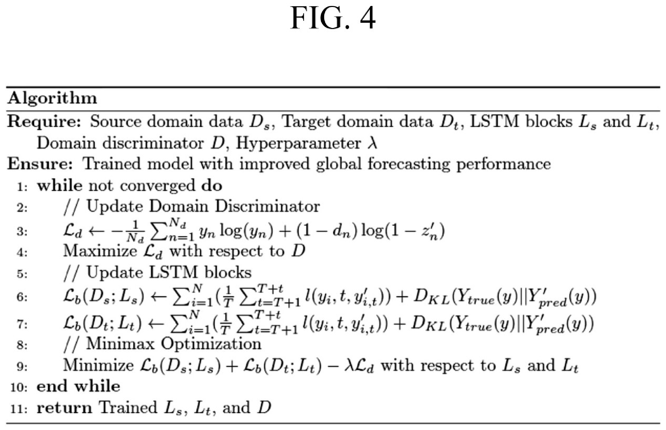

FIG. 2 is a schematic diagram illustrating a method for training a plurality of learning devices in different domains according to an embodiment, FIG. 3 is a flowchart illustrating a method for training a plurality of learning devices in different domains according to an embodiment, and FIG. 4 is a diagram illustrating an algorithm for implementing training by a first loss function, according to an embodiment.

The method illustrated in FIGS. 2 to 4 may be performed, for example, by one or more of the aforementioned domain learning devices 100-1 and 100-2 and domain discrimination device 200. In addition, the method illustrated in FIGS. 2 to 4 may be performed, for example, by a computing device 12 described below. Although the method is described as being divided into a plurality of steps in the illustrated flowchart, at least some of the steps may be performed in a different order, combined with other steps to be performed together, omitted, divided into sub-steps, or performed by adding one or more steps (not shown).

Referring to FIGS. 2 to 4, a method for training a plurality of learning devices in different domains may include a step S100 of generating characteristic data representing the attributes of each domain learning device from input data for each domain learning device and a step S200 of training each domain learning device so that the domain discrimination device cannot distinguish the source of the characteristic data received from each domain learning device.

Each of the domain learning devices 100-1 and 100-2 may execute a machine learning model. In an exemplary embodiment, the machine learning model may be a model that receives and analyzes time series data for a specific physical quantity and predicts the physical quantity for a time that has not yet arrived. For example, time series data analyzed by a machine learning model may represent a workload over time of a server connected to a plurality of computing devices. The workload may be the load of data processed by the server. The machine learning model may analyze the workload amount over time and predict the workload amount for a specific time that has not yet arrived.

Alternatively, in an exemplary embodiment, the machine learning model may be a model that classifies input samples. The machine learning model may predict the classification results of the input samples and provide the classification results to users. For example, a machine learning model may receive a variety of animal images in image format and predict which animal image that image is. Alternatively, a machine learning model may receive an X-ray image for medical diagnosis and predict which disease that X-ray image contains.

The above embodiments are merely examples, and the machine learning model is not limited to the above embodiments, and may perform learning for other objectives.

The machine learning model may include a neural network structure formed by a plurality of neurons and layers. The neural network may contain one or more layers that perform a preset function. Each of the one or more layers may contain a plurality of neurons, which are the minimum units for processing input data.

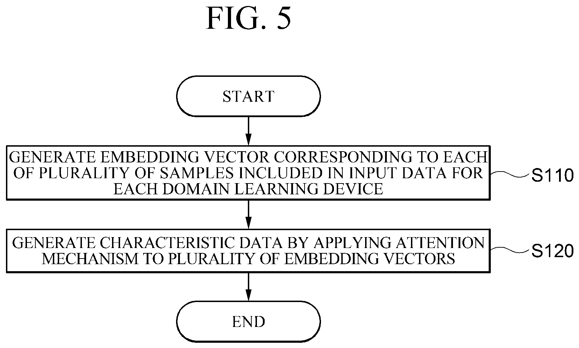

In step S100, each of the domain learning devices 100-1 and 100-2 may generate characteristic data representing the attributes of the domain learning devices 100-1 and 100-2 from input data. The specific details are as follows. The domain learning device 100 may acquire input data. The domain learning device 100 may input the input data into a machine learning model neural network to acquire characteristic data representing the properties of that domain learning device. Specifically, the domain learning device 100 may process the input data by passing the input data through a plurality of layers constituting a neural network to produce the characteristic data. A more specific description of acquiring the characteristic data will be made with reference to FIGS. 2 and 5 below. Each of the domain learning devices 100-1 and 100-2 may transmit each characteristic data to the domain discrimination device 200.

In step S200, each of the domain learning devices 100-1 and 100-2 may be trained by the first loss function so that the domain discrimination device 200 cannot distinguish the source of the characteristic data received from each of the domain learning devices 100-1 and 100-2. (Ordinal expressions such as "first" are described in the order mentioned in the description, and what the name refers to may be determined by the content throughout the specification and may be expressed differently from the ordinal numbers in the claims.) In an exemplary embodiment, the domain learning device 100 may perform training by the first loss function using the algorithm of FIG. 4.

The specific details are as follows. The domain discrimination device 200 may receive characteristic data from each of the domain learning devices 100-1 and 100-2. The transmitted characteristic data may represent properties of the learning of the domain learning device 100-1 or 100-2 which is the source of the characteristic data. The domain discrimination device 200 may infer from which domain learning device 100-1 or 100-2 the received characteristic data was received. That is, the domain discrimination device 200 may determine the source of the received characteristic data. The domain discrimination device 200 may transmit the predicted source of characteristic data to the domain learning device 100-1 or 100-2.

The learning model of each of the domain learning devices 100-1 and 100-2 may be trained so that the domain discrimination device 200 cannot correctly distinguish the source of the characteristic data. In an exemplary embodiment, the domain learning device 100 may compare the characteristic data source prediction value received from the domain discrimination device 200 with a correct value for the source of the characteristic data. The domain learning device 100 may train the machine learning model so that a difference between the characteristic data source prediction value and the correct value of the characteristic data source increases.

The domain discrimination device 200 may adjust the neural network of the learning model executed by each of the domain learning devices 100-1 and 100-2 to determine that the source of first characteristic data received from the first domain learning device 100-1 is the second domain learning device 100-2.

Specifically, the domain discrimination device 200 may calculate a first loss function value that calculate a smaller value as the difference between the inferred source of the characteristic data and the actual source thereof increases. The first loss function may be a function that includes as arguments the predicted source of the characteristic data (hereinafter, a domain source prediction value) and the actual source (hereinafter, a domain source correct value). The first loss function may be a function that has a smaller result value the larger the difference between the domain source prediction value and the domain source correct value. In an exemplary embodiment, the first loss function may produce a smaller result value the more different the domain source prediction value is from the domain source prediction value.

The domain discrimination device 200 may change the parameters of the neurons of each layer constituting the machine learning neural network of the domain learning device 100 so that the value of the first loss function becomes small, thereby producing characteristic data whose source cannot be distinguished. The learning performed by each domain learning device 100 will be described in more detail with reference to FIG. 5 below.

According to a disclosed embodiment, computing devices in different domains may be trained to produce consistent results. In other words, two or more learning models operating in different domain environments may be universally trained together to produce the same results.

In an exemplary embodiment, each cluster of different domains may be trained to produce the same prediction result when receiving new data.

FIG. 5 is a flowchart illustrating a method for generating characteristic data representing attributes of a learning device for each domain learning device, according to an embodiment. The method illustrated in FIG. 5 may be performed, for example, by one or more of the aforementioned domain learning devices 100-1 and 100-2 and domain discrimination device 200. In addition, the method illustrated in FIG. 5 may be performed, for example, by the computing device 12 described below. Although the method is described as being divided into a plurality of steps in the illustrated flowchart, at least some of the steps may be performed in a different order, combined with other steps to be performed together, omitted, divided into sub-steps, or performed by adding one or more steps (not shown).

Referring to FIGS. 2 and 5, the step S100 in which each domain learning device generates characteristic data may include a step S110 in which each domain learning device generates an embedding vector corresponding to each of a plurality of samples included in the input data and a step S120 in which characteristic data is generated by applying an attention mechanism to the plurality of embedding vectors.

In step S110, each of the domain learning devices 100-1 and 100-2 may generate an embedding vector corresponding to each of the plurality of samples included in the input data. The specific details are as follows. The domain learning device 100 may receive data that is the target of learning (hereinafter, input data). The input data may consist of a plurality of samples.

In an exemplary embodiment, the input data may be time series data for a specific physical quantity, and each of the plurality of samples may be each portion obtained by dividing the time series data with respect to time. In another exemplary embodiment, the input data may be a plurality of animal images, and each of the plurality of samples may be one animal image. The above embodiments are merely examples, and the domain learning device 100 is not limited to the above embodiments and may also receive data for other objectives.

The domain learning device 100 may generate an embedding vector corresponding to each sample by passing the plurality of samples through an embedding layer of a neural network.

In addition, in step S112, each of the domain learning devices 100-1 and 100-2 may train a machine learning model by a second loss function based on the generated embedding vector and the input data. (Ordinal expressions such as "first" are expressed in the order mentioned in the description, and what the name refers to may be determined by the content throughout the specification and may be expressed differently from the ordinal numbers in the claims.). For example, the domain learning device 100 may perform one or more of supervised learning, unsupervised learning, reinforcement learning, semi-supervised learning, selfsupervised learning, contrastive learning, meta learning, and transfer learning on a machine learning model.

In an exemplary embodiment, the domain learning device 100 may perform supervised learning on a machine learning neural network. A specific description of how the domain learning device 100 performs supervised learning is as follows. The domain learning device 100 may produce a predicted value according to a preset objective based on an embedding vector from input data. The domain learning device 100 may compare the correct value included in the input data and the predicted value to calculate a second loss function value indicating a difference between the predicted value and the correct value. The domain learning device 100 may adjust the machine learning neural network (including an embedding layer and a hidden layer) that produces the embedding vector and the predicted value so that the second loss function value is reduced.

In an exemplary embodiment, the preset objective may be to predict the workload amount at a specific time, the predicted value may be the predicted workload amount at a specific time, and the correct value may be the actual workload amount at a specific time. In addition, in an exemplary embodiment, the preset objective may be to classify animals shown in animal images, the predicted value may be the type of the predicted animal, and the correct answer value may be the type of the actual animal.

The domain learning device 100 may be trained to minimize the total loss function based on the first loss function and the second loss function. Minimizing the total loss function may mean that the training accuracy of each domain learning device increases, and that the learning of the two domain learning devices produces consistent results. In an exemplary embodiment, the total loss function LOSS_{T} may be as shown in [Equation 1] below. (Ordinal expressions such as "1" are expressed in the order mentioned in the description, and the formula referred to by the corresponding equation may be determined by the content throughout the specification and may be expressed differently from the ordinal numbers in the claims.) ${LOSS}_{T} = {min}_{{L}_{s} , {L}_{t}} {max}_{D} {L}_{b} \left({D}_{s}, {L}_{s}\right) + L \left({D}_{t}:{L}_{t}\right) - {λL}_{d} \left({D}_{s}, {D}_{t}; D, {L}_{s}, {L}_{t}\right)$
*Dₛ, Dₜ*: classification of domain discrimination devices
*λ:* weight for loss in domain source classification
*Lₛ*, *Lₜ*: loss for individual learning of each domain learning device 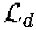
: prediction loss for domain source classification

In step S120, each of the domain learning devices 100-1 and 100-2 may generate characteristic data by applying an attention mechanism to a plurality of embedding vectors. The specific details are as follows.

The domain learning device 100 may generate an embedding vector corresponding to each embedding vector by passing a plurality of embedding vectors generated in the embedding layer through an attention layer. The domain learning device 100 may generate characteristic data that emphasizes only the key characteristics from the input data by assigning weights (attention scores) to important elements of each embedding vector. Each of the first domain learning device 100-1 and the second domain learning device 100-2 nay transmit the characteristic data to the domain discrimination device 200.

In an exemplary embodiment, the domain learning device 100 may calculate the weight (attention score) of each embedding vector through the following [Equation 2]. $α \left({q}_{t}, {k}_{t ′}\right) = \frac{K \left({q}_{t}, {k}_{t ′}\right)}{{\sum }_{t ′ ∈ N \left(t\right)} K \left({q}_{t}, {k}_{t ′}\right)}$
*α*(*qₜ, k_{t'}*): weight of embedding vector
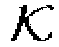 (·,·): kernel function
(*qₜ,kₜ*): multidimensional vector of input data (embedding vector)

In this case, the kernel function may be a pre-defined positive semi-definite kernel function.

In this case, the embedding vector (*qₜ, kₜ*) of [Equation 2] may be calculated through [Equation 3]. $\left({q}_{t}, {k}_{t}\right) = MLP \left(Q, K, {θ}_{s}\right)$
(*qₜ*, *kₜ*): multidimensional vector of input data (embedding vector)
*Q*: query data of vector
*K*: key data of vector
*θₛ*: learning parameters in multi-layer perceptron (MLP)

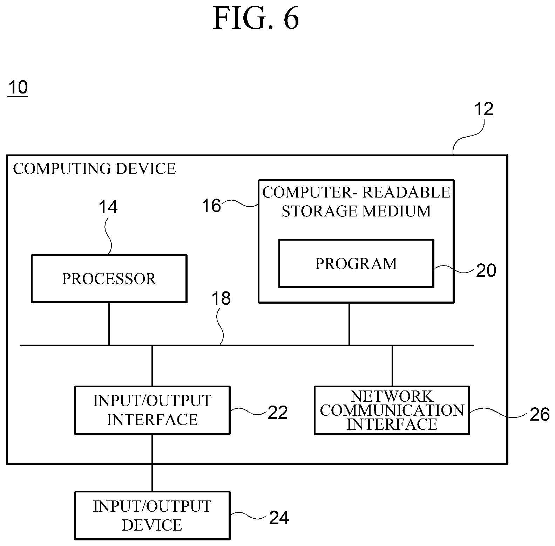

FIG. 6 is a block diagram illustrating a configuration of a computing device for training a plurality of learning devices in different domains, according to an embodiment. In the illustrated embodiment, each component may have different functions and capabilities other than those described below, and may include additional components other than those described below.

An illustrated computing environment 10 includes a computing device 12. In an embodiment, the computing device 12 may be each of the domain learning devices 100-1 and 100-2 described above and may perform the role of each of the domain learning devices 100-1 and 100-2 in the method of training a plurality of learning devices in different domains described in FIGS. 1 to 5.

In addition, in an embodiment, the computing device 12 may be the domain division device 200 described above, and may perform the role of the domain division device 200 in the method of training the plurality of learning devices in different domains described in FIGS. 1 to 5.

The computing device 12 includes at least one processor 14, a computer-readable storage medium 16, and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured so that the computing device 12 performs operations according to the exemplary embodiment.

The computer-readable storage medium 16 is configured to store the computer-executable instruction or program code, program data, and/or other suitable forms of information. A program 20 stored in the computer-readable storage medium 16 includes a set of instructions executable by the processor 14. In an embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and capable of storing desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a speech or sound input device, input devices such as various types of sensor devices and/or photographing devices, and/or output devices such as a display device, a printer, a speaker, and/or a network card. The exemplary input/output device 24 may be included inside the computing device 12 as a component configuring the computing device 12, or may be connected to the computing device 12 as a separate device distinct from the computing device 12.

Although representative embodiments of the present invention have been described in detail above, those skilled in the art will understand that various modifications may be made to the above-described embodiments without departing from the scope of the present invention. Therefore, the scope of the present invention should not be limited to the described embodiments, but should be defined not only by the patent claims described below but also by those equivalent to the patent claims.

## Claims

1. A method performed on a computing device including one or more processors and a memory storing one or more programs executed by the one or more processors, the method comprising the steps of:
outputting characteristic data representing attributes of a machine learning model by inputting input data of a predetermined domain into the machine learning model;
transmitting the characteristic data to a domain discrimination device;
receiving a domain source prediction value corresponding to the characteristic data from the domain discrimination device; and
training the machine learning model by a first loss function that increases a difference between the domain source prediction value and a domain correct value of the characteristic data.

2. The method of claim 1, wherein the step of outputting the characteristic data includes:
a step of generating a plurality of embedding vectors from input data of the computing device; and
a step of producing characteristic data by applying an attention mechanism to the plurality of embedding vectors.

3. The method of claim 2, wherein the step of applying the attention mechanism includes:
a step of calculating a weight of each of the plurality of embedding vectors; and
a step of producing characteristic data based on the weight of each of the embedding vectors.

4. The method of claim 3, wherein the weight *α*(*qₜ*, *k_{t'}*) is calculated by the following Equation 1, $α \left({q}_{t}, {k}_{t ′}\right) = \frac{K \left({q}_{t}, {k}_{t ′}\right)}{{\sum }_{t ′ ∈ N \left(t\right)} K \left({q}_{t}, {k}_{t ′}\right)}$
*α*(*qₜ*, *k_{t'}*): weight of embedding vector
(·,·): Kernel function
(*qₜ*, *kₜ*): multidimensional vector of input data (embedding vector).

5. The method of claim 4, wherein the embedding vector (*qₜ, kₜ*) is calculated by the following Equation 2, $\left({q}_{t}, {k}_{t}\right) = MLP \left(Q, K, {θ}_{s}\right)$
(*qₜ*, *kₜ*): multidimensional vector of input data (embedding vector)
*Q*: query data of vector
*K*: key data of the vector
*θₛ*: training parameters of multi-layer perceptron (MLP).

6. The method of claim 2, further comprising a step of training the machine learning model according to a preset second loss function based on the input data and the plurality of embedding vectors.

7. A method performed on a computing device including one or more processors and a memory storing one or more programs executed by the one or more processors, the method comprising the steps of:
acquiring characteristic data representing characteristics of a learning model executed by each of two or more learning devices from each of the two or more learning devices;
determining a source of the characteristic data and calculating a domain source prediction value;
transmitting the domain source prediction value to each of the two or more learning devices; and
controlling each of the two or more learning devices to train the learning model based on a first loss function that uses the domain source prediction value and a correct value of the domain source as factors.

8. The method of claim 7, wherein the first loss function is a function set so that a calculated value of the first loss function decreases as a difference between the domain source prediction value and a correct value of the domain source increases.

9. The method of claim 7, wherein the first loss function is a function set so that the calculated value of the first loss function becomes small when the domain source prediction value and the correct value of the domain source are determined to be different.

10. A computing device comprising:
one or more processors; and
a memory that stores one or more programs executed by the one or more processors,
wherein the one or more programs include the instructions for:
outputting characteristic data representing attributes of a machine learning model by inputting input data of a predetermined domain into the machine learning model;
transmitting the characteristic data to a domain discrimination device;
receiving a domain source prediction value corresponding to the characteristic data from the domain discrimination device; and
training the machine learning model by a first loss function that increases a difference between the domain source prediction value and a domain correct value of the characteristic data.

11. The computing device of claim 10, wherein the outputting the characteristic data includes:
an instruction for generating a plurality of embedding vectors from input data of the computing device; and
an instruction for producing characteristic data by applying an attention mechanism to the plurality of embedding vectors.

12. The computing device of claim 11, wherein the instruction for applying the attention mechanism includes:
an instruction for calculating a weight of each of the plurality of embedding vectors; and
an instruction for producing characteristic data based on the weight of each of the embedding vectors.

13. The computing device of claim 12, wherein the weight *α*(*qₜ*, *k*_{*t*'}) is calculated by the following Equation 1, $α \left({q}_{t}, {k}_{t ′}\right) = \frac{K \left({q}_{t}, {k}_{t ′}\right)}{{\sum }_{t ′ ∈ N \left(t\right)} K \left({q}_{t}, {k}_{t ′}\right)}$
*α*(*qₜ*, *k_{t'}*): weight of embedding vector
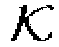 (·,·): Kernel function
(*qₜ*, *kₜ*): multidimensional vector of input data (embedding vector).

14. The computing device of claim 13, wherein he embedding vector (*qₜ*, *kₜ*) is calculated by the following Equation 2, $\left({q}_{t}, {k}_{t}\right) = MLP \left(Q, K, {θ}_{s}\right)$
( *qₜ*, *kₜ*)*:* multidimensional vector of input data (embedding vector)
*Q*: query data of vector
*K*: key data of the vector
*θₛ*: training parameters of multi-layer perceptron (MLP).

15. The computing device of claim 11, wherein the one or more programs further includes an instruction for training the machine learning model according to a preset second loss function based on the input data and the plurality of embedding vectors.
